Europäisches Patentamt

European Patent Office

Office européen des brevets

(11) Veröffentlichungsnummer : **0 087 505**
**B1**

# EUROPÄISCHE PATENTSCHRIFT

(45) Veröffentlichungstag der Patentschrift :
30.07.86

(51) Int. Cl.⁴ : **B 23 D 79/00**

(21) Anmeldenummer : **82110630.9**

(22) Anmeldetag : **18.11.82**

(54) **Vorrichtung zur Behandlung von Werkstücken, insbesondere thermische Entgratanlage.**

(30) Priorität : **12.02.82 DE 3205069**

(43) Veröffentlichungstag der Anmeldung :
**07.09.83 Patentblatt 83/36**

(45) Bekanntmachung des Hinweises auf die Patenterteilung : **30.07.86 Patentblatt 86/31**

(84) Benannte Vertragsstaaten :
**DE FR GB IT**

(56) Entgegenhaltungen :
**US-A- 3 252 312**
**US-A- 3 666 252**
**US-A- 3 851 426**
**TECHNICA, Band 24, 1979, Seiten 2140,2148, Basel, CH, "Oberflächenbehandlung"**
**Die Akte enthält technische Angaben, die nach dem Eingang der Anmeldung eingereicht wurden und die nicht in dieser Patentschrift enthalten sind.**

(73) Patentinhaber : **ROBERT BOSCH GMBH**
**Postfach 50**
**D-7000 Stuttgart 1 (DE)**

(72) Erfinder : **Drexel, Peter**
**Plieningerstrasse 33**
**D-7031 Steinenbronn (DE)**
Erfinder : **Kaden, Hans-Dieter**
**Holzwiesenstrasse 17**
**D-7410 Reutlingen (DE)**
Erfinder : **Martini, Helmut, Dipl.-Ing.**
**Kalkofenweg 23/3**
**D-7252 Weil der Stadt 5 (DE)**

(74) Vertreter : **Brommer, Hans Joachim, Dr.-Ing. et al**
**Patentanwälte Dipl.-Ing. R. Lemcke Dr.-Ing. H.J. Brommer Amalienstrasse 28 Postfach 4026**
**D-7500 Karlsruhe 1 (DE)**

EP 0 087 505 B1

**Beschreibung**

Stand der Technik

Die Erfindung betrifft eine Vorrichtung zur Behandlung von Werkstücken, insbesondere eine thermische Entgratanlage gemäß dem Oberbegriff von Patentanspruch 1. Derartige Vorrichtungen werden vorwiegend zum Entgraten metallischer und nicht metallischer Werkstücke verwendet. Gleichermaßen lassen sich damit auch die Schwimmhäute von spritzgegossenen Werkstücken aus Leichtmetall oder Kunststoff entfernen. Schließlich eignen sich diese Vorrichtungen auch zur Sterilisierung von Werkstücken, insbesondere im medizinischen Bereich.

Die zu behandelnden Werkstücke werden in eine Arbeitskammer eingelegt, diese Kammer wird geschlossen und mit einem Brenngas-Sauerstoffgemisch gefüllt. Bei der anschließenden Zündung dieses Gasgemisches entstehen kurzzeitig Temperaturen im Bereich von 2 500 °C bis 3 500 °C. Dadurch verbrennen die Grate und Schwimmhäute, da ihre Oberfläche im Verhältnis zum Volumen groß ist. Da das Gasgemisch auch in Hohlräume des Werkstückes eindringt, werden auch alle innen liegenden Grate sicher erreicht. Zugleich findet durch die Temperatureinwirkung eine Sterilisierung statt.

Derartige Anlagen sind durch zahlreiche Patentanmeldungen und Patente der Anmelderin bekannt. Dabei ist der den Schließteller tragende Hohlkolben außen längs einer Buchse geführt, die sich über die gesamte Länge des Hohlkolbens erstreckt, wobei der obere Abschluß der Buchse durch einen im Durchmesser reduzierten Führungsring gebildet ist, der mit einer im Durchmesser entsprechend reduzierten Zylinderfläche des Hohlkolbens korrespondiert, wohingegen die Buchse selbst mit einem am unteren Ende des Hohlkolbens vorstehenden Bund korrespondiert.

Dadurch ergibt sich zum einen eine sehr starre Axialführung für den Hohlkolben und den anmontierten Schließteller. Zum anderen dient der Bund auch zur Aufnahme eines Sicherheitsventiles, das in geöffnetem Zustand den unterhalb des Hohlkolbens befindlichen Druckraum mit dem Ringraum zwischen Hohlkolben und Buchse verbindet, welcher Ringraum seinerseits am oberen Ende an eine Rückflußleitung angeschlossen ist. Die Betätigung dieses Ventiles im Öffnungssinne erfolgt automatisch, sobald der Hohlkolben seine obere Totpunktposition erreicht. Damit ist sichergestellt, daß sich der Druck im Druckraum automatisch abbaut, sobald der Hohlkolben seinen oberen Totpunkt erreicht hat. Der am oberen Ende der Buchse montierte Führungsring braucht also nicht für die erheblichen Druckkräfte ausgelegt zu werden, die im Druckraum unterhalb des Hohlkolbens herrschen.

Der vorliegenden Erfindung liegt die Aufgabe zugrunde, eine etwas weichere Lagerung für den Hohlkolben anzugeben, damit er sich in der Schließphase bei einem eventuellen Versatz relativ zur Arbeitskammer selbsttätig anpassen kann. Außerdem soll auf das bisher notwendige Sicherheitsventil verzichtet werden können, ohne daß die Gefahr besteht, daß der im Druckraum unter dem Hohlkolben herrschende Druck von der Buchse oder ihrem Führungsring aufgenommen werden muß. Der erste Teil dieser Aufgabe wird durch die Vorrichtung nach Anspruch 1, der zweite Teil dieser Aufgabe durch die Merkmale nach Anspruch 3 gelöst.

Vorteile der Erfindung

Die erfindungsgemäße Vorrichtung mit den kennzeichnenden Merkmalen des Patentanspruches 1 bietet gegenüber der bisher bekannten Konstruktion den Vorteil, daß die Außenführung am unteren Ende des Hohlkolbens entfällt. Dadurch wird nicht nur die Axialführung des Hohlkolbens etwas elastischer, kann sich also besser an einen eventuellen Versatz der Arbeitskammer anpassen, sondern es ergeben sich auch erhebliche Einsparungen bei den Fertigungskosten, da die Buchse nur noch in ihrem oberen Bereich eine Führungsfläche aufweisen muß.

Da durch die erfindungsgemäße Lösung der Ringraum zwischen Buchse und Hohlkolben nicht mehr wie bisher zum Ableiten des Druckmittels verwendet werden kann, wenn der Hohlkolben seine obere Totpunktlage erreicht, wird in Weiterbildung des Erfindungsgedankens gemäß Anspruch 3 die Ventilsicherung in die den Hohlkolben zentral durchquerende Kolbenstange verlegt. Durch die nahe dem oberen Ende der Kolbenstange angeordneten Rückflußbohrungen kann sich der im Druckraum unter dem Hohlkolben herrschende Druck automatisch abbauen, sobald sich der Hohlkolben seiner oberen Totpunktlage nähert, d. h., sobald seine untere Führungsbuchse die Rückflußbohrungen passiert hat. Das bisher notwendige separate Sicherheitsventil ist also durch einfache Querbohrungen in der Kolbenstange ersetzt worden.

Zeichnung

Weitere Einzelheiten und Merkmale der Erfindung ergeben sich aus der Zeichnung und der nachfolgenden Beschreibung ; dabei zeigt :

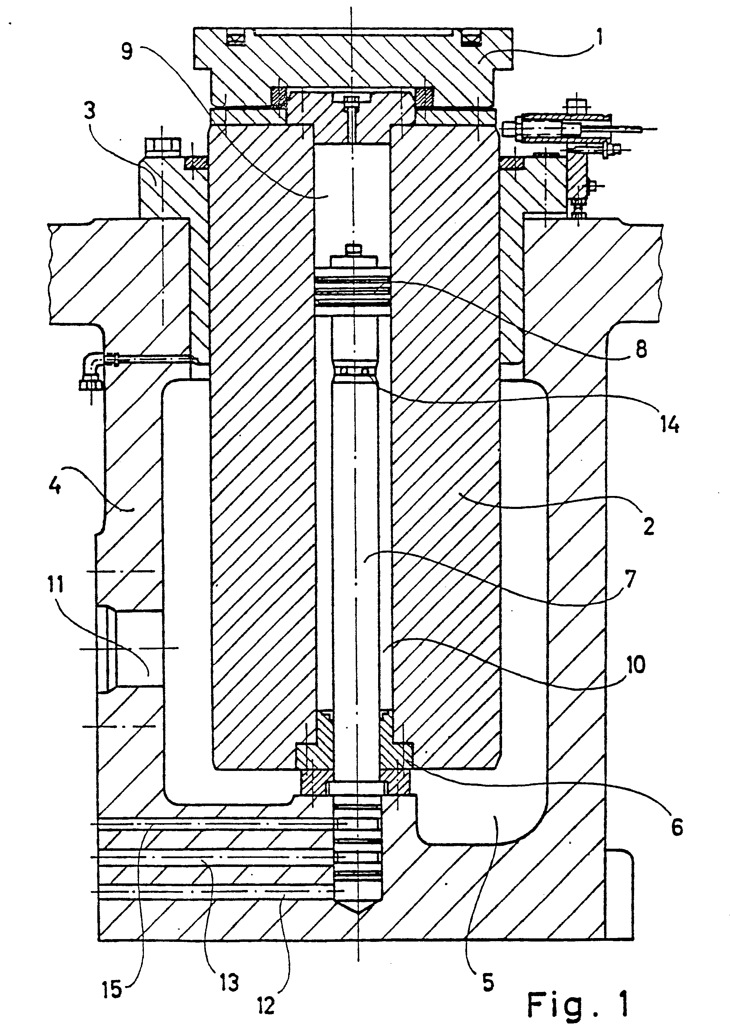

Figur 1 das hydraulische Schließsystem mit dem den Schließteller tragenden Hohlkolben und seiner Führung in einem Axialschnitt und

Figur 2 das Hydraulikschema für den Eilhub.

Beschreibung des Ausführungsbeispieles

Der die zu behandelnden Werkstücke aufnehmende Schließteller 1 liegt auf einem Hohlkolben 2 auf, so daß er hydraulisch an die darüber befindliche, in der Zeichnung nicht dargestellte Arbeitskammer angepreßt werden kann.

Die Axialführung des Hohlkolbens 2 erfolgt an der Außenseite durch eine Buchse 3, die am oberen Ende eines Zylinders 4 montiert ist. Der Zylinder 4 umgibt den Hohlkolben 2 mit Spiel und bildet dadurch einen Druckraum 5.

Außerdem ist der Hohlkolben 2 innen durch eine Buchse 6 geführt. Diese Buchse 6 sitzt am unteren Ende einer zentralen Bohrung des Hohlkolbens und gleitet auf einer Kolbenstange 7, die ihrerseits fest mit dem Zylinder 4 verbunden ist. Am oberen Ende weist die Kolbenstange 7 einen vorstehenden Dichtungsbund 8 auf, der den darüber befindlichen Raum 9 von dem Ringraum 10 zwischen Kolbenstange 7 und Hohlkolben 2 abdichtet.

Durch diese Art der Führung ist sichergestellt, daß der Hohlkolben 2 in Radialrichtung elastischer geführt ist als bei der herkömmlichen Konstruktion, wo er zusätzlich an seinem unteren Ende durch einen vorstehenden Außenbund im Zylinder 4 geführt war. Zugleich ergibt sich dadurch eine deutliche Verringerung der Herstellungskosten, da weniger Führungsflächen zu bearbeiten sind. Die Axiallänge der Buchse 3 beträgt zweckmäßig etwa 70 % des Hohlkolben-Durchmessers.

Die Verbindung des Druckraumes 5 mit einer Druckmittelquelle erfolgt in der üblichen Weise über einen Anschluß 11, wohingegen der Raum 9 über eine Axialbohrung in der Kolbenstange 7 mit Druckmittel beaufschlagbar ist.

Die Funktion ist folgende : Um den Hohlkolben 2 im Eilgang zu der nicht dargestellten Arbeitskammer hochzufahren, wird der Raum 9 über die vorerwähnte Axialbohrung in der Kolbenstange 7 mit Hydraulikflüssigkeit beaufschlagt. Die sodann erforderliche starke Anpressung des Schließtellers 1 an die Arbeitskammer zur Aufnahme der bei der Zündung des Gasgemisches auftretenden Kräfte wird durch Förderung von Hydraulikflüssigkeit über den Anschluß 11 in den Druckraum 5 erreicht. Nach der Zündung des Gasgemisches wird der Hohlkolben 2 wieder abgesenkt. Dies geschieht durch Druckmittelzufuhr in den Ringraum 10 zwischen der Kolbenstange 7 und dem Hohlkolben 2. Die Strömungskanäle für den Eilhub nach oben bzw. nach unten sind durch die Bezugszeichen 12 bzw. 13 angedeutet.

Außerdem weist die Kolbenstange 7 eine dritte Längsbohrung auf, die an Querbohrungen 14 nahe dem oberen Ende der Kolbenstange in den Ringraum 10 mündet und die an ihrem unteren Ende über einen Strömungskanal 15 an den Druckmittelrückfluß angeschlossen ist. Die Querbohrungen 14 sind so positioniert, daß sie von der Buchse 6 überfahren werden, wenn sich der Hohlkolben seiner oberen Totpunktlage nähert. Dadurch ergibt sich folgende Wirkung : Wenn der Bund 6 die Querbohrungen 14 passiert hat, wird der Druckraum 5 an den Strömungskanal 15 zur Ölrückflußleitung angeschlossen. Damit ist sichergestellt, daß dann, wenn der Hohlkolben 2 aufgrund einer Fehlschaltung bis zum oberen Totpunkt hochfährt, der erhebliche Betriebsdruck im Druckraum 5 automatisch abgebaut wird und daß die Druckkräfte nicht von dem mit der Buchse 6 in Anlage kommenden Dichtungsbund 8 der Kolbenstange aufgenommen werden müssen. Das bisher hierfür notwendige separate Sicherheitsventil am Hohlkolben entfällt.

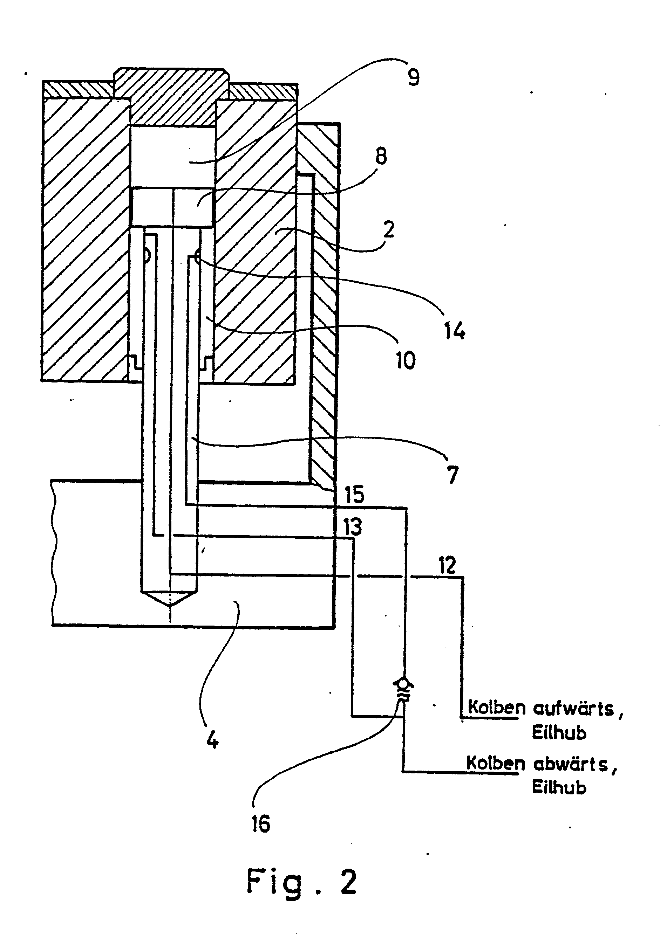

Das in Fig. 2 dargestellte Hydraulikschema verdeutlicht den Verlauf der drei Längsbohrungen in der Kolbenstange 7. Man erkennt insbesondere, daß die an den Strömungskanal 13 angeschlossene Axialbohrung oberhalb der Querbohrungen 14 mündet, damit der Abwärtshub des Hohlkolbens 2 auch aus der oberen Totpunktlage möglich ist.

Außerdem zeigt Fig. 2, daß der mit den Axialbohrungen 14 verbundene Strömungskanal 15 über ein Ventil 16 an den Strömungskanal 13 angeschlossen sein kann. Das Ventil 16 ist als Rückströmventil ausgebildet, d. h., daß es nur bei einer Rückströmung aus dem Strömungskanal 15 öffnet.

**Patentansprüche**

1. Vorrichtung zur Behandlung von Werkstücken mittels Temperatur- und Druckstößen durch Zündung eines Gasgemisches, insbesondere thermische Entgratanlage, mit einer die Werkstücke und das Gasgemisch aufnehmenden Arbeitskammer, die an ihrer Unterseite durch einen das Werkstück tragenden, hydraulisch heb- und senkbaren Schließteller (1) zu verschließen bzw. zu öffnen ist, wozu der Schließteller auf einem Hohlkolben (2) aufliegt, der seinerseits außen in einer Buchse (3) und innen an einer zentralen Kolbenstange (7) axial verschiebbar geführt ist, wobei der innere Zylinderraum (9) oberhalb der zentralen Kolbenstange durch Bohrungen in der Kolbenstange für den Eilhub und der äußere Zylinderraum (5) an der Kolbenunterseite für den Druckhub mit Druckmittel beaufschlagbar ist, dadurch gekennzeichnet, daß die Außenführung des Hohlkolbens (2) auf den in der abgesenkten Kolbenposition oben liegenden Kolbenbereich beschränkt ist und daß die Führungslänge der Buchse (3) kleiner als der Durchmesser des Hohlkolbens (2) ist.

2. Vorrichtung nach Anspruch 1, dadurch gekennzeichnet, daß die Führungslänge der Buchse (3) 60 % bis 80 % des Durchmessers des Hohlkolbens (2) beträgt.

3. Vorrichtung nach Anspruch 1 oder 2, dadurch gekennzeichnet, daß am oberen Ende der Kolbenstange (7) Rückflußbohrungen (14) für das Druckmittel münden, die bei Erreichen der oberen Kolbenposition mit dem Druckraum (5) in Verbindung treten.

**Claims**

1. Apparatus for treating workpieces by means of temperature and pressure surges by ignition of a gas mixture, particularly a thermal deburring device, with a work chamber which receives the workpieces and the gas mixture and is to be closed or opened on its underside by an hydraulically raisable and lowerable closing plate (1) bearing the workpiece, for which the closing plate rests on a hollow piston (2) which for its part is guided axially displaceably on the outside in a bush (3) and on the inside against a central piston rod (7), the inner cylinder space (9) above the central piston rod being pressurisable by a pressure medium through bores in the piston rod for the rapid traverse stroke and the outer cylinder space (5) at the underside of the piston being pressurisable by a pressure medium for the pressure stroke, characterised in that the inside guidance of the hollow piston (2) is confined to the piston region lying at the top in the lowered piston position and in that the guidance length of the bush (3) is less than the diameter of the hollow piston (2).

2. Apparatus according to claim 1, characterised in that the guidance length of the bush (3) is 60 % to 80 % of the diameter of the hollow piston (2).

3. Apparatus according to claim 1 or 2, characterised in that return flow bores (14) for the pressure medium open out at the top end of the piston rod (7) and, when the top piston position is reached, are in connection with the pressure space (5).

**Revendications**

1. Dispositif pour traiter des pièces d'œuvre au moyen de chocs de température et de pression par allumage d'un mélange gazeux, en particulier pour l'ébavurage thermique, dispositif comportant une chambre de travail dans laquelle sont logés la pièce d'œuvre et le mélange gazeux et qui peut être fermée ou bien ouverte sur son côté inférieur par un disque de fermeture (1) susceptible d'être soulevé et abaissé hydrauliquement et portant la pièce d'œuvre, ce disque de fermeture s'appliquant sur un piston creux (2) qui, de son côté, est guidé extérieurement dans une douille (3) et intérieurement sur une tige centrale de piston (7) de façon à pouvoir coulisser axialement, la chambre interne (9) du cylindre au-dessus de la tige centrale de piston étant susceptible d'être alimentée en fluide sous pression par des perçages dans la tige de piston pour la course rapide, tandis que la chambre (5) extérieure au cylindre du côté inférieur du piston est susceptible d'être alimentée en fluide sous pression pour la course de compression, dispositif caractérisé en ce que le guidage externe du piston creux (2) est limité à la zone située à la partie supérieure de ce piston lorsque ce piston est abaissé, et que la longueur de guidage de la douille (3) est inférieure au diamètre du piston creux (2).

2. Dispositif selon la revendication 1, caractérisé en ce que la longueur de guidage de la douille (3) se situe entre 60 % et 80 % du diamètre du piston creux (2).

3. Dispositif selon la revendication 1 ou 2, caractérisé en ce qu'à l'extrémité supérieure de la tige de piston (7) débouchent des perçages de retour (14) pour le fluide sous pression, ces perçages venant en communication avec la chambre de pression (5) lorsque le piston atteint sa position supérieure.

0 087 505

Fig. 1

Fig . 2

Kolben aufwärts,
Eilhub

Kolben abwärts,
Eilhub